# EUROPEAN PATENT SPECIFICATION

(11) **EP 1 534 963 B1**
(45) Date of publication and mention of the grant of the patent: **01.08.2007**
(21) Application number: 03732683.2
(22) Date of filing: 03.06.2003
(51) Int. Cl.: F16B 1/00

(54) **SAFETY NUT AND BOLT CLUTCH ASSEMBLY**
VORRICHTUNG EINER BOLZEN- UND MUTTERSICHERHEITSKUPPLUNG
ECROU ET BOULON DE SECURITE

(30) Priority: 06.06.2002 GB 0212949; 24.07.2002 GB 0217100; 14.08.2002 GB 0218819; 14.09.2002 GB 0221381
(43) Date of publication of application: 01.06.2005
(73) Proprietor: McConkey, James, Cardonald, Glasgow G52 2HH (GB); Nugent, Brian, Cambuslang, Glasgow G72 8BD (GB)
(72) Inventor: McConkey, James, Glasgow G52 2HH (GB)
(74) Representative: McKechnie, Neil Henry
(86) International application number: PCT/GB2003/002415
(87) International publication number: WO 2003/104661

(56) References cited:
- US-A- 2 660 212
- US-A- 4 690 600
- US-A- 4 874 275

## Description

The present invention relates to safety nut and bolt and more specifically to a safety nut and bolt which can be easily joined together but cannot then be unscrewed in a typical fashion.

A generally known assembly of this kind is disclosed in the preamble of claim 1.

Nuts and bolts are used in a multitude of different situations from use in the home to use in heavy industry. Particularly in heavy industry type uses, the principle utility of nuts and bolts is to secure items in position and prevent the separation of one or more objects. When a nut shape is loose, or is loosened from some reason, this can produce very dangerous situations as a bolt can simply fall out allowing the objects that it was supposed to be holding in position to move freely. It is particularly important in areas such as railways where the loosening of a bolt on a track can lead to disastrous consequences. This is particularly apparent when looking at the Potters Bar rail crash in which a loosened nut and bolt was implicated in the disaster. Also, in heavy industry such as wind turbines where there is a lot of vibration it has been known for nuts to become loose over time causing severe and sometimes dangerous problems.

It can be seen that it would be beneficial to provide a nut and bolt which would not loosen due to vibration or could not be physically unloosened accidentally or by vandals. There have been a number of previous inventions that have tried to provide these benefits such as US Patent No. US 4,278,120, and WO03/104661 however these nut and bolt systems have been overly complex or are still not sufficiently secure.

It is the first object of the present invention to provide a safety nut and bolt that can be easily joined together but which cannot then be easily parted.

A further object of the present invention is to provide a safety nut and bolt system which has the strength to be used in heavy duty industry.

It is a yet further object of the present invention to produce a safety nut and bolt system which is simple to produce and has relatively low production costs.

According to the present invention there is provided a nut and bolt assembly having the features set forth in claim 1. Further features of the invention are disclosed in the dependent claims.

Preferably the roller bearings are part of a one way clutch bearing which can be inserted into the nut aperture.

Most preferably there is a recess in the nut aperture into which the clutch bearing can be placed and held in position by interference fit.

A further option is that the bearings may be part of a clutch bearing which can be attached to the end of a nut.

Preferably the bolt is provided as a single piece.

Alternatively the bolt may be provided with a detachable tapered section at the end of the shaft.

Preferably the detachable tapered section is provided with a threaded aperture through its longitudinal axis.

Preferably, when there is a detachable tapered section, the shaft has a threaded recess.

Most preferably the detachable tapered section is attached to the shaft using a securing screw which runs through the aperture in the tapered section and into the recess at the end of the shaft.

The thread on the outside of the shaft may be right or left-handed.

Preferably, the thread in the aperture through the longitudinal axis of the shaft may be right or left-handed.

Preferably the nut and bolt are made from a metallic material.

Alternatively, the nut and bolt may be made from any appropriate material.

In order to provide better understanding of the present invention, embodiments will now be described by way of example only and with reference to the accompanying figures in which:
Figure 1 shows an exploded view of the nut and bolt assembly where the bolt is provided in a number of sections and a clutch bearing is placed into a recess in the nut;
Figure 2 shows an exploded view of the nut and bolt assembly wherein the bolt is provided in a single piece and a clutch bearing is attached to the end of the nut;
Figure 3 shows a nut and bolt assembly according to the present invention wherein the nut is provided with roller bearings on its internal surface.

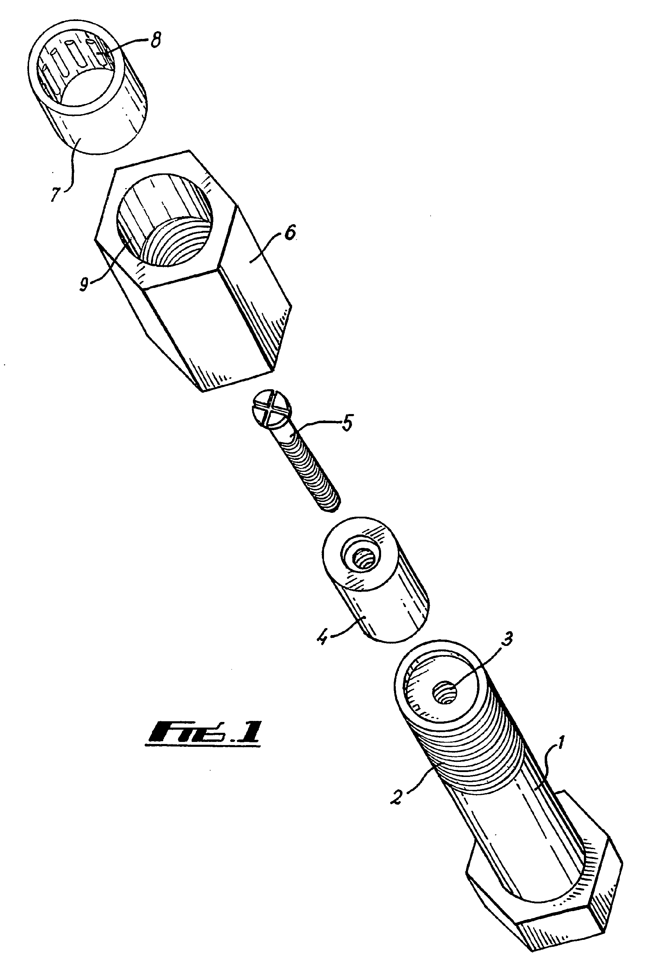

According to a first embodiment (as in fig.1) of the present invention, there is provided a nut 6 and bolt 1 system comprising a bolt 1, which has an external thread 2 on the outer surface of the shaft. A detachable tapered section 4 is attached to the bolt 1 via a screw 5 which runs longitudinally through the detachable tapered section 4 and into a threaded recess 3 in the bolt 1. There is also provided a nut 6 through which runs a partially threaded aperture. The aperture is provided with a recess 9 into which a one way clutch bearing 7 can fit. The one way clutch bearing 7 is held in the recess 9 by interference fit. In alternative embodiments it will be possible to use other methods of securing the on way clutch bearing 7 into the recess 9 including gluing, soldering or any other appropriate securing means. The one way clutch bearing 7 contains roller bearings 8 which only allow movement in one direction around the circumference of the bearing 7.

One way clutch bearings allow shafts to move in only one direction. A one way clutch bearing is typically designed very much like a roller bearing but the rollers are allowed to move in one direction only. When the shaft turns in a direction that locks the clutch the rollers roll up small ramps and wedge into cavities preventing further movement.

The nut 6 and bolt 1 can be joined together by screwing the bolt 1 through the nut 6 such that the tapered section 4 connects with the roller bearings 8. The roller bearings 8 will allow the bolt 1 to be screwed in one direction but will prevent the bolt 1 from then being unscrewed in the opposite direction. In this instance the only way that the bolt 1 can be removed from the nut 6 is by unscrewing the securing screw 5, releasing the tapered section 4 from the end of the bolt 1 such that the bolt section 1 can be released from the threaded section of the nut 6 whilst the tapered section 4 is still held in place by the roller bearings 8.

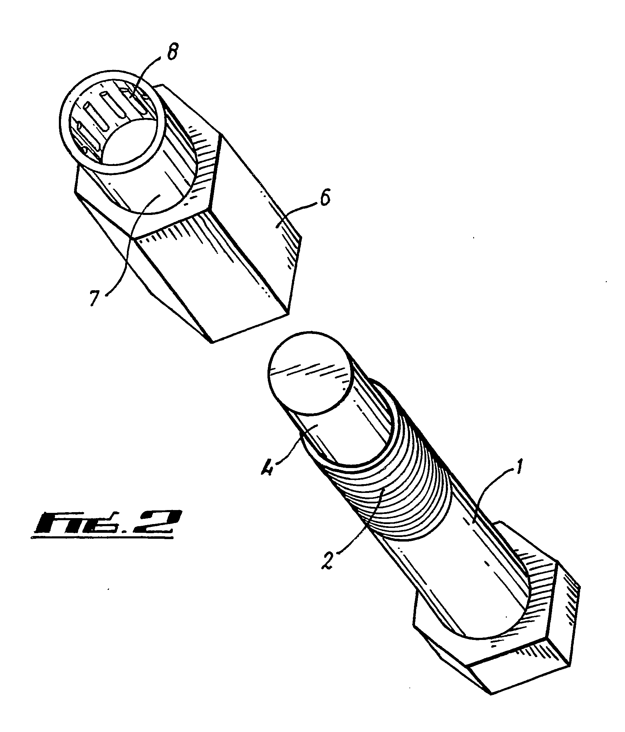

In certain instances, it may be that there are requirements that the bolt 1 should never be able to be released from the nut 6 through unscrewing. For example, on rail tracks etc where vandalism may be dangerous. Therefore, the preferred embodiment in this case has a single piece of bolt as can be seen in Figure 2 (please note however although Figure 2 shows the single piece bolt it can be used with any of the variations of nut shown in Figures 1, 2 or 3). As the bolt 1 is a single piece with the tapered section 4 not being detachable when the bolt one is screwed into the nut 6, the roller bearings 8 will hold it in place and it will not be possible to unscrew the bolt 1 once it is fitted. In this case, the only way in which the bolt 1 can be removed is by physically breaking of the head of the bolt 1.

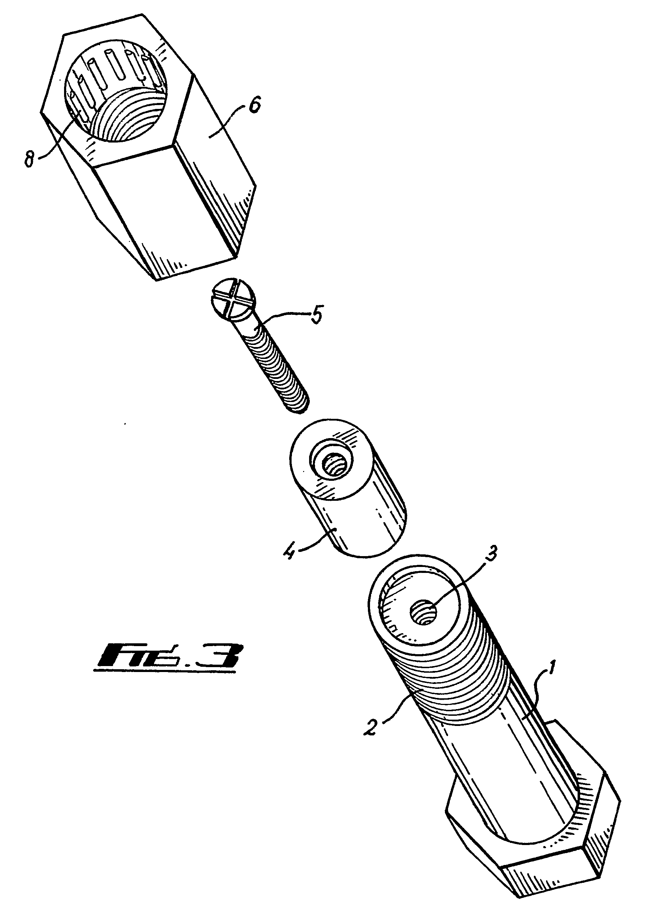

An alternative embodiment with either the single piece bolt 1 which is shown in Figure 2 or the multi-piece bolt 1 with a detachable tapered section 4 shown in Figures 1 and 3, is that instead of having a separate one way clutch bearing 7 either inserted into a recess of the nut as shown in Figure 1, or attached to the end of the nut as shown in Figure 2, there is simply roller bearings 8 provided on the inside surface of the nut 6 (as shown in Figure 3) .

There are a number of other alternative embodiments which are not shown in the figures which can obviously be used in this invention. For example, rather than using roller bearings 8 to prevent a relatively smooth tapered section 4 from moving in an unwanted direction, a ratchet mechanism could be used where the tapered section 4 and the internal surface of the nut 6 are both shaped such that the tapered section will be able to move in one direction but not the other. Also, it is clear that the tapered section 4 does not need to have a narrower circumference than the bolt and this is dependent on the circumference of the section containing the roller bearings 8.

It can be seen that the embodiment disclosed above are merely exemplary of the invention which may be embodied in various forms.

## Claims

1. A nut and bolt assembly comprising, a nut (6) with an at least partially threaded axially extending aperture, and a bolt (1) comprising a head and a shaft, **characterised in that** the inner circumference of the nut comprises one or more roller bearings (8) arranged for rotation in one direction only and that the shaft of the bolt is provided with a threaded portion (2) adapted to engage the threaded portion of the nut (6) and a relatively smooth portion (4) adapted to engage with the one or more roller bearings (8).

2. A nut and bolt assembly as in Claim, wherein the roller bearings (8) are part of a one way clutch bearing (7).

3. A nut and bolt assembly as in Claim 2, wherein there is a recess in the nut aperture into which the clutch bearing (7) can be placed and held in position by interference fit.

4. A nut and bolt assembly as in Claims 1 and 2, wherein the roller bearings may be part of a clutch bearing which can be attached to the end of a nut (6).

5. A nut and bolt assembly as in any of the previous Claims, wherein the bolt (1) is provided as a single piece.

6. A nut and bolt assembly as in Claims 1 to 4, wherein the bolt (1) may be provided with a detachable smooth portion (4) at the end of the shaft.

7. A nut and bolt assembly as in Claim 6, wherein the detachable smooth portion (4) is provided with a threaded aperture through its longitudinal axis.

8. A nut and bolt assembly as in Claims 6 and 7, wherein the shaft has a threaded recess (3).

9. A nut and bolt assembly as in Claim 8, wherein the detachable smooth portion (4) is attached to the shaft (2) using a securing screw (5) which runs through the aperture in the smooth portion (4) and into the recess (3) at the end of the shaft.

10. A nut and bolt assembly as in any of the previous Claims, wherein the thread on the outside of the shaft (2) and/or the thread in the aperture (3) through the longitudinal axis of the shaft may be left or right-handed.

## Patentansprüche

1. Mutter- und Bolzenanordnung, umfassend eine Mutter (6) mit einer wenigstens teilweise mit Gewinde versehenen axial verlaufenden Öffnung und einen Bolzen (1), der einen Kopf und einen Schaft umfasst, **dadurch gekennzeichnet, dass** der Innenumfang der Mutter wenigstens ein zur Drehung in nur einer Richtung angeordnetes Rollenlager (8) umfasst und dass der Schaft des Bolzens mit einem Gewindeteil (2), der für den Eingriff mit dem Gewindeabschnitt der Mutter (6) ausgeführt ist, und einem relativ glatten Teil (4), der für den Eingriff mit dem wenigstens einen Rollenlager (8) ausgeführt ist, versehen ist.

2. Mutter- und Bolzenanordnung nach Anspruch 1, bei der die Rollenlager (8) Teil eines Einwegkupplungslagers (7) sind.

3. Mutter- und Bolzenanordnung nach Anspruch 2, bei der sich in der Mutternöffnung eine Aussparung befindet, in die das Kupplungslager (7) eingesetzt und durch Presspassung in ihr in Solllage gehalten werden kann.

4. Mutter- und Bolzenanordnung nach Anspruch 1 und Anspruch 2, bei der die Rollenlager Teil eines Kupplungslagers sein können, das am Ende einer Mutter (6) angebracht werden kann.

5. Mutter- und Bolzenanordnung nach einem der vorhergehenden Ansprüche, bei der der Bolzen(1) einstückig bereitgestellt ist.

6. Mutter- und Bolzenanordnung nach den Ansprüchen 1 bis 4, bei der der Bolzen (1) mit einem abnehmbaren glatten Teil (4) am Ende des Schaftes versehen sein kann.

7. Mutter- und Bolzenanordnung nach Anspruch 6, bei der der abnehmbare glatte Teil (4) mit einer mit Gewinde versehenen Öffnung durch seine Längsachse versehen ist.

8. Mutter- und Bolzenanordnung nach Anspruch 6 und Anspruch 7, bei der der Schaft eine mit Gewinde versehene Aussparung (3) hat.

9. Mutter- und Bolzenanordnung nach Anspruch 8, bei der der abnehmbare glatte Teil (4) mithilfe einer Sicherungsschraube (5), die durch die Öffnung im glatten Teil (4) und in die Aussparung (3) am Ende des Schaftes verläuft, am Schaft (2) angebracht ist.

10. Mutter- und Bolzenanordnung nach einem der vorhergehenden Ansprüche, bei der das Gewinde an der Außenseite des Schaftes (2) und/oder das Gewinde in der Öffnung (3) durch die Längsachse des Schaftes links- oder rechtsgängig sein kann.

## Revendications

1. Ensemble composé d'un écrou et d'un boulon comprenant un écrou (6) présentant une ouverture s'étendant dans le sens axial au moins partiellement filetée et un boulon (1) comprenant une tête et une tige, **caractérisé en ce que** la circonférence interne de l'écrou comprend un ou plusieurs roulements à rouleaux (8) à même de tourner dans un sens seulement et **en ce que** la tige du boulon est pourvue d'une partie filetée (2) à même de venir en prise avec la partie filetée de l'écrou (6) et une partie relativement lisse (4) à même de venir en prise avec le ou les roulements à rouleaux (8).

2. Ensemble composé d'un écrou et d'un boulon suivant la revendication 1, dans lequel les roulements à rouleaux (8) font partie d'une butée de débrayage unidirectionnelle (7).

3. Ensemble composé d'un écrou et d'un boulon suivant la revendication 2, dans lequel se trouve un évidement dans l'ouverture de l'écrou dans lequel la butée de débrayage (7) peut être placée et maintenue en position par ajustement avec serrage.

4. Ensemble composé d'un écrou et d'un boulon suivant les revendications 1 et 2, dans lequel les roulements à rouleaux peuvent faire partie d'une butée de débrayage qui peut être fixée à l'extrémité d'un écrou (6).

5. Ensemble composé d'un écrou et d'un boulon suivant l'une quelconque des revendications précédentes, dans lequel le boulon (1) est d'un seul tenant.

6. Ensemble composé d'un écrou et d'un boulon suivant les revendications 1 à 4, dans lequel le boulon (1) peut être pourvu d'une partie lisse détachable (4) à l'extrémité de la tige.

7. Ensemble composé d'un écrou et d'un boulon suivant la revendication 6, dans lequel la partie lisse détachable (4) est pourvue d'une ouverture filetée à travers son axe longitudinal.

8. Ensemble composé d'un écrou et d'un boulon suivant les revendications 6 et 7, dans lequel la tige comporte un évidement fileté (3).

9. Ensemble composé d'un écrou et d'un boulon suivant la revendication 8, dans lequel la partie lisse détachable (4) est fixée à la tige (2) à l'aide d'une vis de fixation (5) qui traverse l'ouverture dans la partie lisse (4) et dans l'évidement (3) à l'extrémité de la tige.

10. Ensemble composé d'un écrou et d'un boulon suivant l'une quelconque des revendications précédentes, dans lequel le filet à l'extérieur de la tige (2) et/ou le filet dans l'ouverture (3) à travers l'axe longitudinal de la tige peut être à gauche ou à droite.
